# EUROPEAN PATENT SPECIFICATION

(11) **EP 1 918 896 B1**
(45) Date of publication and mention of the grant of the patent: **17.10.2018**
(21) Application number: 06425747.0
(22) Date of filing: 30.10.2006
(51) Int. Cl.: G08G 1/16, B60Q 1/52, B62D 15/02

(54) **Improved vehicle driving assistance system for keeping/changing lanes and associated operating method**
Verbessertes Fahrerassistenzsystem für Halten/Wechsel von Fahrspuren und dazugehörende Verfahren
Système de suivi/changement de voie amélioré et procédé de fonctionnement correspondant

(43) Date of publication of application: 07.05.2008
(73) Proprietor: Magneti Marelli S.p.A., 20011 Corbetta (MI) (IT)
(72) Inventor: Ghisio, Guido, 10078 Venaria Reale (Torino) (IT)
(74) Representative: Deambrogi, Edgardo

(56) References cited:
- EP-A- 1 615 048
- WO-A-01/45067
- US-A1- 2003 025 597
- US-A1- 2004 148 057
- US-A1- 2006 206 243

## Description

The present invention relates to vehicle driving assistance systems and more specifically to a driving assistance system and method for the "lateral" movements performed by the vehicle, in particular for helping stay in or change travel lanes, in accordance with the preamble of Claim 1 and Claim 17, respectively.

During recent years, the progress achieved in the sector of passive safety and the equipping of vehicles with active safety systems have helped achieve a notable improvement in road safety.

In order to reduce further the danger situations and achieve a greater driving comfort, driving assistance systems which are able to assist the driver whilst performing manoeuvres and in every critical driving situation which may occur on the roads, preventing any risk situations, are being developed.

The preventive safety functions managed by these systems include lateral control of the vehicle, which envisages controlling the vehicle so as to avoid any movement out of the travel lane or, in the case where the driver wishes to "deviate" from the abovementioned travel lane, assisting said operation by checking for the presence of any vehicles approaching from behind in the lane to be moved into.

These systems are arranged to inform the driver about the need to adapt his/her travel trajectory using different information systems, such as visual instructions, acoustic signals and tactile or "haptic" signals.

For example, in connection with a system aimed at keeping the vehicle in the travel lane (known as "Lane Departure Warning") it is envisaged to signal crossing of the travel lane demarcation lines which has occurred or is about to happen if said crossing manoeuvre is not intentional or if the lane change has not been indicated in advance by operation of the appropriate directional indicator, by acoustic means or by providing the driver with a tactile sensation (haptic feedback) in the form of vibration of the steering wheel or a torque applied to the steering wheel which produces a sensation of resistance to crossing the lane demarcation lines and "suggests" the appropriate steering action to be performed in order to bring back or keep the vehicle within the said lane.

In connection with a system for providing help during the travel lane changing manoeuvre, for example assistance during overtaking, sensors are envisaged for monitoring the side and rear area of the vehicle ("Blind Spot Monitoring") in order to detect other vehicles approaching in the lane to be occupied and reduce the risks of collisions. Signalling in this case is typically performed by visual interfaces, such as LEDs which are positioned on the rear-view mirrors, and/or acoustic signals, but equally possible are haptic feedbacks on the steering wheel, such as vibration signals or the generation of a resistive torque which opposes a dangerous manoeuvre, in a manner similar to that which occurs in a Lane Departure Warning system.

Both systems have been developed over the years, independently of each other, resulting in fact in the production of separate systems which duplicate structures and which do not complement each other advantageously (for example, a Blind Spot Monitoring system does not necessarily indicate the presence of vehicles in the blind zone if the vehicle on which it is installed, in the event of no directional indicator being activated, does not deviate laterally (a situation controlled by the Lane Departure Warning system)).

A vehicle collision warning system is disclosed in EP 1 615 048. An object detection routine is provided, e.g. to sense a blind spot detection zone. Upon detecting the presence of an object in the blind spot detection zone a visual warning icon is presented to the driver. Next, the activation of the turn signal or any other indication of a turn or lane change of the vehicle is detected in order to alert the driver that the vehicle is moving towards the detected object.

The object of the present invention is to provide a driving assistance system and method with an incorporated lateral support function, which also allows a high performance to be achieved in terms of driving efficiency and safety, while maintaining an interface for communication with the driver which can be easily understood, logical and natural.

According to the present invention this object is achieved by means of a driving assistance system having the characteristic features indicated in Claim 1 and an associated method having the characteristic features indicated in Claim 17.

Particular embodiments of the invention form the subject of the dependent claims.

In brief, the present invention is based on the principle of incorporating in a single lateral support system for assistance with driving a system for helping keep the travel lane and a system for helping change the travel lane, switching in succession between the different functions depending on recognition of the travel condition and activation of the directional indicator devices.

In particular, the system is arranged to assess the current driving condition on the basis of signals indicating the position of the vehicle with respect to the configuration of the road travelled along and subsequently on the basis of signals indicating the presence of vehicles close by.

Specifically, the signals indicating the position of the vehicle with respect to the configuration of the road travelled along are signals relating to the area in front of the vehicle, and the signals indicating the presence of vehicles close by are signals relating to at least an area behind or along the side of the vehicle.

The system is arranged to assess the driving conditions on the basis of the rear/side area signals immediately after conducting a first evaluation on the basis of the front area signals, if a deviation of the vehicle with respect to the demarcation lines of the road lane which it is travelling along is not recognized.

In the event of a deviation of the vehicle being recognized, the system is arranged to check activation of the directional indicator devices. If this is the case, the system interprets the manoeuvre out of the lane travelled along as being voluntary and gets ready to assist the manoeuvre on the basis of rear/side area signals, alerting the driver as to an incorrect driving manoeuvre if it recognizes hazardous driving conditions. In the negative, the system interprets the manoeuvre as being involuntary and gets ready to alert the driver in any case as to an anomalous driving condition.

Signalling of the current driving condition, and in particular of an incorrect driving manoeuvre, is performed by means of visual, acoustic or tactile ("haptic") signalling devices and preferably by means of a combination of these devices.

In the currently preferred embodiment, the signalling devices comprise at least one LED and/or a display screen for displaying pictograms or for showing short messages, an acoustic warning device and actuating means for producing a vibration on the steering wheel or actuating means adapted to apply a resistive torque to the vehicle steering system.

Further characteristic features and advantages of the invention will be described more fully in the following detailed description, provided by way of a non-limiting example, with reference to the accompanying drawings in which:
Figure 1 is a block diagram of a driving assistance system according to the invention;
Figure 2 is a simplified schematic illustration of an on-board arrangement of the main components of the driving assistance system according to Figure 1; and
Figure 3 is a flow diagram representing operation of the driving assistance system according to the invention.

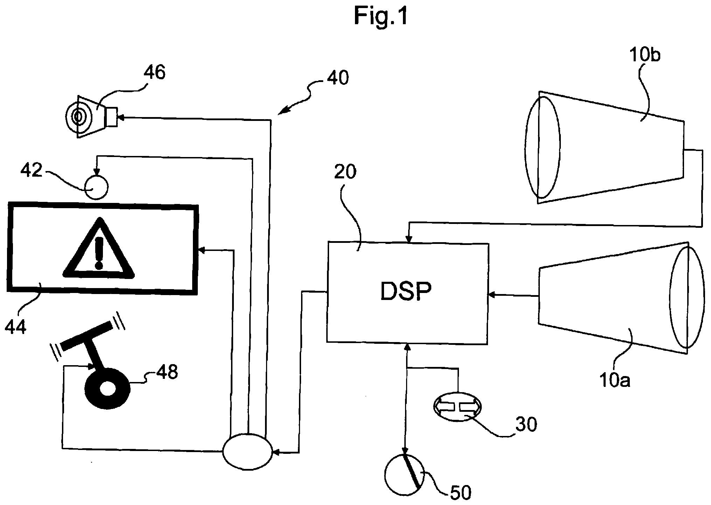

Figure 1 shows a block diagram of a driving assistance system for helping keep or change the travel lane, according to the invention.

With 10a and 10b are denoted two devices for detecting the environment surrounding the vehicle, i.e. a device for detecting an area in front of the vehicle and a device for detecting an area along the side and behind the vehicle, which are illustrated here in the form of recording devices such as telecameras and the like, but may obviously be realized using other technologies in accordance with the commonly available know-how of the sector, for example as remote radio detection devices, such as radars and the like.

The detection devices 10a, 10b are linked to a processing and control unit 20, preferably in the form of a digital signal processor, which is supplied, respectively, with front area signals indicating the position of the vehicle with respect to the configuration of the road to be travelled along, and rear/side area signals relating to the presence of vehicles close by.

In particular, the device 10a for detecting an area in front of the vehicle is adapted to provide signals indicating the position of the vehicle with respect to demarcation lines of a lane travelled along by the vehicle, or more generally with respect to the layout and division of the road, and the device 10b for detecting a side and rear area of the vehicle is adapted to provide signals indicating the presence, position and/or speed of other vehicles approaching from behind or coming up alongside the vehicle, for example when overtaking.

The processing unit 20 is adapted to acquire from the signals supplied by the devices 10a, 10b information relating to the driving scenario of the vehicle and assess the driving conditions on the basis of this information so as to operate on-board signalling devices arranged to inform the driver as to the current driving condition.

With 30 are denoted sensor means indicating an activated condition of the directional indicator devices of the vehicle.

Numeral 40 denotes as a whole the devices for signalling the driving conditions to the driver, i.e. visual signalling devices such as a light-emitting diode (LED) or similar light-emitting source 42 and a display screen 44 for displaying pictograms or showing short messages; an acoustic signalling device 46; and tactile signalling devices 48, such as actuating means for producing a vibration on the steering wheel or electrically operated steering actuating means, the operating principle of which will be described more fully below.

These signalling devices are adapted to assume a first state indicating an incorrect driving manoeuvre, for signalling to the driver an anomalous driving condition for which a manoeuvre or actuation of a vehicle driving system is required, a second state providing a danger warning, for signalling to the driver an alert condition, and a third state indicating a correct or safe driving condition.

Finally, 50 denotes a switching device for activating/deactivating the system.

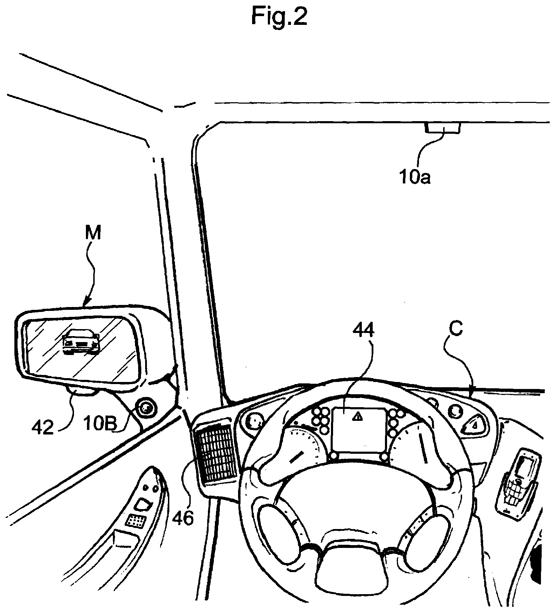

With reference to Figure 2, a preferable on-board arrangement of the devices mentioned is suggested.

The device 10a for detecting an area in front of the vehicle (not shown) is arranged on a front surface of the vehicle, for example in the vicinity of the windscreen or - in a more forwards position - on the bonnet or on the front bumper, while the device 10b for detecting an area along the side or behind the vehicle is mounted preferably on an upright supporting at least one side rear-view mirror M or in any case on a surface directed towards the rear of the vehicle.

Among the signalling devices, the LED or similar light-emitting source 42 forms an indicator lamp arranged in the vicinity of at least one rear-view mirror of the vehicle, for example the side rear-view mirror M on the driver's side, within the frame supporting the reflecting part or on the upright supporting the body of the rear-view mirror. It is designed to emit light consisting of at least two different colours and for this purpose is composed of an RGB diode. Preferably, the different colours considered to be most suitable for this purpose are red and green, able to indicate a danger condition or danger-free condition respectively, in a manner similar to that of traffic light signals, which are the same in all countries and can be immediately and intuitively understood by the driver.

The display screen 44 is preferably arranged within the on-board instrument panel C. It is arranged to display a pictogram or similar stylized symbol representing danger, for signalling to the driver an anomalous driving condition, otherwise remaining deactivated or displaying travel parameters and other information.

The acoustic warning device 46 is arranged on the vehicle dashboard, possibly integrated into the on-board sound distribution system. It is designed to emit a warning tone so as to signal to the driver an anomalous driving condition, otherwise remaining deactivated.

The tactile signalling devices 48 are provided in the form of actuating devices for producing a vibration on the steering wheel W, incorporated within the structure of the steering wheel itself or within the support for the steering wheel on the steering shaft. More preferably, they are provided as steering actuators associated with an electrically operated steering system so as to control the steering system automatically. In both cases, they help provide a feedback response of the "haptic" type which constitutes the most intuitive driver/vehicle interface device for the steering system, for signalling an anomalous driving condition to the driver, otherwise remaining deactivated.

The processing and control unit 20 of the system is arranged in the body of the rear-view mirror M or, inside the vehicle, underneath the dashboard, and can be integrated with other on-board electronic control units, for example so as to form a subsystem which is designed to monitor the environment around the vehicle, making use also of signals supplied by other sensors (viewing sensors, proximity sensors, etc.) and able to adopt individual specific measures or a combined strategy on the basis of data fusion techniques.

Essentially, the processing and control unit 20 is arranged to assess the current driving condition on the basis of the front area and rear/side area signals.

Firstly, a control strategy of the Lane Departure Warning (LDW) type is performed, namely the system assumes the mode whereby it alerts the driver as to an anomalous driving condition, namely one which is potentially dangerous, when it recognizes a deviation of the vehicle from the demarcation lines of the road lane along which it is travelling and no activation of the directional indicators is detected, so that the system interprets any manoeuvre out of the lane travelled along as involuntary.

Secondly, a control strategy of the Lane Change Support (LCS) type is performed, namely the system assumes the mode whereby it assists the driver during a lane changing manoeuvre, for example in order to perform overtaking, and alerts him/her as to an anomalous driving condition, namely one which is potentially dangerous. This occurs in the case where no deviation of the vehicle from the demarcation lines of the lane travelled along is noted, in order to assist the driver with the decision to perform an overtaking manoeuvre, or in the case of deviation of the vehicle indicated by means of the directional indicators, and hence a voluntary manoeuvre, in order to assist the driver with preparation of the overtaking manoeuvre. The systems prepares itself for monitoring the side and rear area of the vehicle so as to provide the driver with a complete and up-to-date picture of the environment around the vehicle. It monitors, in particular, the side area which corresponds to the so-called "blind spot", which the driver cannot monitor via the rear-view mirrors, and the rear area which the driver might not be able to see clearly in poor visibility conditions.

Moreover, it must be emphasized that, in the case of detection devices adapted to provide signals indicating the speed of the vehicles approaching from behind, the system during operation as a Lane Change Support system also assesses the possibility of performing a lane changing manoeuvre depending on the approach speed of the other vehicles concerned, so that it warns the driver that he/she is about to perform a dangerous manoeuvre in relation to the existing traffic conditions, even when the vehicles are visible in the rear-view mirrors, helping the driver to assess the real distance and approach speed of other vehicles, which are often difficult to determine by means of the rear-view mirrors.

In an improved embodiment, it is possible to envisage the use of a device for detecting an area in front of the vehicle so as to control not only the lane demarcation lines, but also the side lane in front for further safety during overtaking, in order to avoid frontal impacts with vehicles approaching, but not noticed, for example because of reduced visibility conditions.

In summary, the control and processing unit is arranged to assess a driving condition on the basis of the combination of the front area signals and rear/side area signals, namely assess overall a driving condition on the basis of the rear/side area signals after carrying out a first evaluation on the basis of the front area signals, so as to provide constantly information to the driver on the environment surrounding the vehicle, in order to avoid incorrect or dangerous manoeuvres.

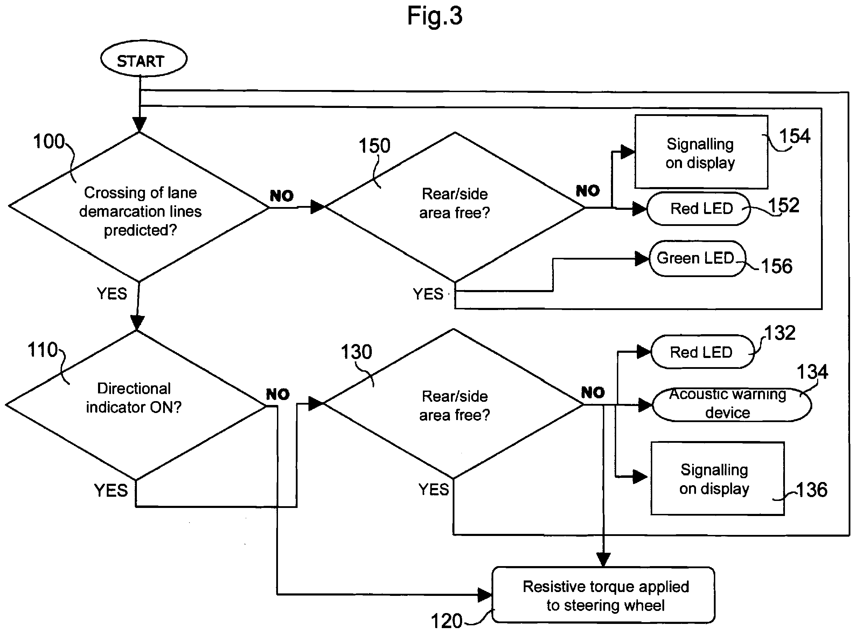

With reference to Figure 3, the operation of the driving assistance system according to Figure 1 is described below.

The pictures recorded by the front detection device 10a are supplied to the processing unit 20 which interprets them using algorithms which are known in travel lane tracking systems (step 100).

When crossing of the lane demarcation lines occurs, or is expected to occur, the processing unit checks whether this crossing manoeuvre is intentional (step 110) on the basis of the signals supplied by the sensors 30 indicating an activated condition of the directional indicator devices of the vehicle.

If crossing of the travel lane demarcation lines is not indicated in advance by operation of the associated directional indicator, this is interpreted as an anomalous driving condition, and the processing unit activates the tactile signalling devices 48, signalling to the driver the danger condition by means of vibration of the steering wheel or causing application of a resistive torque to the steering wheel (step 120) so as to provide the steering wheel with a feedback of the "haptic" type, which produces a sensation of resistance to crossing of the lane demarcation lines and "suggests" the appropriate steering action to be undertaken so as to bring back or keep the vehicle within the said lane.

If crossing of the lane demarcation lines is preceded by operation of the associated directional indicator, this is interpreted as being a voluntary manoeuvre on the part of the driver, and the processing unit acquires and interprets the pictures taken by the side/rear detection device 10b using known algorithms (step 130), in order to check whether other vehicles are approaching from behind or are coming up alongside the vehicle occupying the lane which the driver intends occupying.

If this is so, namely if the side/rear area is not considered to be free, the unit 20 activates the on-board signalling devices in a first activated state, so as to warn the driver about the dangerous nature of the manoeuvre. Specifically, it causes the LED 42 to emit a red light (132), activates the acoustic warning device (134) and causes display of a warning signal on the display (136) in an alternate, simultaneous or sequential manner. Separately, the unit 20 causes generation of a vibration on the steering wheel or acts on the steering system by applying an opposing torque (as in step 120) so as to provide a feedback of the "haptic" type on the steering wheel, intended to ensure intuitive correction of the travel path.

If the negative, namely if the side/rear area is considered to be free, the unit 20 does not activate the on-board signalling devices, in particular the LED 42 remains in its rest state, which is distinguished for example by the emission of a green light, and it prepares itself for interpreting the new pictures taken by the front detection device 10a (step 100) as described above.

In the case where, following interpretation of the signals supplied by the front detection device 10a to the step 100, the unit 20 recognizes that the vehicle remains within its delimited travel lane, therefore recognizing correct driving conditions, it also examines the side/rear area of the vehicle, acquiring and interpreting the pictures taken by the side/rear detection device 10b (step 150), in order to check in any case whether other vehicles are approaching from behind or situated alongside the vehicle, occupying the lane adjacent to the lane travelled along, so as to inform the driver of the environment surrounding the vehicle as a whole.

If the side/rear area is not considered to be free, the unit 20 activates the on-board signalling devices in a second activated state, namely causes the LEDs 42 to emit a red light (152) and causes the display of a warning signal on the display (154), so as to warn the driver as to the dangerous nature of any overtaking manoeuvre performed. If the side/rear area is considered to be free, the unit 20 causes the LED 42 to remain in its rest state (156) distinguished for example by the emission of a green light, and prepares itself for interpreting the new pictures taken by the front detection device 10a (step 100) as described above.

In an improved embodiment, in the case where an anomalous driving condition persists, it is even possible for the processing unit to operate autonomously the steering system of the vehicle, in fact taking the place of the driver in order to perform the appropriate vehicle managing operations, after a predetermined time interval allowing for a voluntary reaction on the part of the driver has lapsed.

Obviously, without modifying the principle of the invention, the embodiments and constructional details may be greatly varied with respect to that described and illustrated purely by way of a non-limiting example, without thereby departing from the scope of protection of the present invention defined by the accompanying claims.

## Claims

1. Vehicle driving assistance system for helping keep or change the travel lane, the vehicle being equipped with directional indicator devices which can be selectively operated by the driver in order to signal a change in the direction of travel of the vehicle and with signalling means (40) adapted to inform the driver as to the current driving condition, wherein the vehicle driving assistance system comprises in combination:
- means (10a, 10b) for detecting the environment surrounding the vehicle, including:
- first detection means (10a) adapted to provide first signals indicating the position of the vehicle with respect to the configuration of the road travelled along; and
- second detection means (10b) adapted to provide second signals indicating the presence of vehicles close by;
- sensor means (30) indicating an activated condition of the directional indicator devices; and
- electronic processing and control means (20) connected to said sensor means (30) and to said detection means (10a, 10b) for acquiring information relating to the driving scenario of the vehicle, and adapted to operate said signalling means (40) depending on said scenario information,
**characterized in that**
said processing and control means (20) are arranged for:
- firstly assessing the current driving condition on the basis of said first signals; and
- when said first signals indicate a manoeuvre involving a change in the travel lane and said sensor means (30) sense that said directional indicator devices have not been activated, operating said signalling means (40) so as to assume a first activated state indicating an incorrect driving manoeuvre, for signalling to the driver an anomalous driving condition so that a manoeuvre or actuation of a vehicle driving system is required; or else alternatively when said first signals indicate a manoeuvre involving a change in the travel lane and said sensor means (30) sense that said directional indicator devices have been activated, then subsequently
- assessing the current driving condition on the basis of the second signals; and
- when said sensor means (30) detect that said directional indicator devices are activated and said second signals indicate the presence of approaching vehicles, operating said signalling means (40) so as to assume a first activated state indicating an incorrect driving manoeuvre, for signalling to the driver an anomalous driving condition so that a manoeuvre or actuation of a vehicle driving system is required,
or alternatively, if the first signals indicated a condition where the same travel lane is maintained, then subsequently assessing the current driving condition on the basis of the second signal and
- when said second signals indicate the presence of approaching vehicles, operating said signalling means (40) so as to assume a second activated state providing a danger warning, for signalling to the driver an alert condition.

2. System according to Claim 1, in which said means (10a, 10b) for detecting the environment surrounding the vehicle include:
- first means (10a) for detecting an area in front of the vehicle, adapted to provide front area signals indicating the position of the vehicle with respect to the configuration of the road travelled along; and
- second means (10b) for detecting at least one area along the side and behind the vehicle, adapted to provide rear/side area signals indicating the presence of vehicles close by.

3. System according to any one of the preceding claims, in which said first detection means (10a) are adapted to provide signals indicating the position of the vehicle with respect to demarcation lines of a travel lane.

4. System according to any one of the preceding claims, in which said signals relating to the presence of vehicles close by comprise signals indicating the relative position of these vehicles.

5. System according to Claim 4, in which said signals relating to the presence of vehicles close by comprise signals indicating the relative speed of these vehicles.

6. System according to any one of the preceding claims, in which the processing and control means (20) are arranged for assessing the driving condition on the basis of the vehicle presence signals after performing a first evaluation on the basis of the vehicle position signals.

7. System according to any one of the preceding claims, in which said signalling means (40) are adapted to assume/maintain a rest state indicating a correct or safety driving condition, respectively:
when the vehicle position signals indicate a manoeuvre involving a change of travel lane for which said directional indicator devices are activated, and said vehicle presence signals indicate the absence of approaching vehicles; and
when the vehicle position signals indicate a condition where the same travel lane is maintained, and said vehicle presence signals indicate the absence of approaching vehicles.

8. System according to any one of the preceding claims, in which said signalling means comprise visual signalling devices (42, 44) which can be operated so as to assume a first activated state indicating an incorrect driving manoeuvre and/or a second activated state providing a danger warning.

9. System according to Claim 8, in which said visual signalling devices comprise at least one light-emitting diode (42) adapted to assume a first red colour emitting state and a second green colour emitting state.

10. System according to Claim 9, in which said signalling device is arranged in the vicinity of at least one rear-view mirror (M) of the vehicle.

11. System according to Claim 8, in which said visual signalling devices comprise at least one display screen (44) for displaying pictograms or for showing short messages.

12. System according to Claim 11, in which said signalling device (44) is arranged within the on-board instrument panel (C) .

13. System according to any one of the preceding claims, in which said signalling means comprise an acoustic warning device (46) which can be operated in a first activated state indicating an incorrect driving manoeuvre.

14. System according to any one of the preceding claims, in which said signalling means comprise tactile signalling devices (48).

15. System according to Claim 14, in which said tactile signalling devices (48) comprise actuating means for producing a vibration on the steering wheel, which can be operated in a condition where there is an incorrect driving manoeuvre.

16. System according to Claim 14, in which said tactile signalling devices (48) comprise steering actuating means which can be electrically operated, the processing means being adapted to cause said actuating means to impart a resistive torque of predetermined value to the vehicle steering system during an incorrect driving manoeuvre.

17. Vehicle driving assistance method for helping keep or change the travel lane, the vehicle being equipped with directional indicator devices which can be selectively operated by the driver in order to signal a change in the direction of travel of the vehicle, and with signalling means (40) adapted to inform the driver about the current driving condition, wherein the method comprises the operations of:
- acquiring information relating to the environment surrounding the vehicle, including:
- providing first signals indicating the position of the vehicle with respect to the configuration of the road travelled along; and
- providing second signals indicating the presence of vehicles close by;
- detecting the state of the directional indicator devices;
**characterised in that** the method further comprises the operations of:
- firstly assessing the current driving condition on the basis of said first signals; and
- when a manoeuvre involving a change in the travel lane is detected and said directional indicator devices are not activated, operating said signalling means (40) so as to assume a first activated state indicating an incorrect driving manoeuvre, for signalling to the driver an anomalous driving condition so that a manoeuvre or actuation of a vehicle driving system is required;
or else alternatively when a manoeuvre involving a change in the travel lane is detected and said said directional indicator devices are activated, then subsequently
- assessing the current driving condition on the basis of said vehicle presence signals, and
- when said directional indicator devices are activated and the presence of approaching vehicles is detected, operating said signalling means (40) so as to assume a first activated state indicating an incorrect driving manoeuvre, for signalling to the driver an anomalous driving condition so that a manoeuvre or actuation of a vehicle driving system is required; or alternatively, if a condition where the travel lane is maintained is detected, then subsequently assessing the current driving condition on the basis of the second signal and
- operating said signalling means (40) so as to assume a second activated state providing a danger warning, for signalling to the driver an alert condition.

18. Method according to Claim 17, in which the acquisition of information relating to the environment surrounding the vehicle includes:
- detecting an area in front of the vehicle and providing front area signals indicating the position of the vehicle with respect to the configuration of the road travelled along; and
- detecting at least one area along the side of and behind the vehicle and providing rear/side area signals indicating the presence of vehicles close by.

19. Method according to any one of Claims 17 or 18, in which the operation of providing signals indicating the position of the vehicle with respect to the configuration of the road travelled along includes providing signals indicating the position of the vehicle with respect to demarcation lines of a travel lane.

20. Method according to any one of Claims 17 to 19, in which the operation of providing signals indicating the presence of vehicles close by includes providing signals indicating the relative position of these vehicles.

21. Method according to Claim 20, in which the operation of providing signals indicating the presence of vehicles close by includes providing signals indicating the relative speed of these vehicles.

22. Method according to any one of Claims 17 to 21, comprising the further operation of assessing the driving condition on the basis of the vehicle presence signals after performing a first assessment on the basis of the vehicle position signals.

23. Method according to any one of Claims 17 to22, comprising moreover the operation of causing said signalling means to assume/maintain a rest state indicating a correct or safety driving condition, respectively:
when a manoeuvre involving a change of travel lane is detected for which said directional indicator devices are activated, and the absence of approaching vehicles is detected; and
when a condition where the same travel lane is maintained is detected, and the absence of approaching vehicles is detected.

24. Method according to any one of Claims 17 to 23, in which operating said signalling means (40) includes driving at least one light-emitting diode (42) in a first activated state indicating an incorrect driving manoeuvre and/or in a second activated state providing a danger warning.

25. Method according to any one of Claims 17 to 24, in which operating said signalling means (40) includes driving a display screen (44) so as to display pictograms or show short messages.

26. Method according to any one of Claims 17 to 25, in which operating said signalling means (40) includes activating an acoustic warning device (46) in a first activated state indicating an incorrect driving manoeuvre.

27. Method according to any one of Claims 17 to 26, in which operating said signalling means (40) includes producing a vibration on the steering wheel during a condition where there is an incorrect driving manoeuvre.

28. Method according to any one of Claims 17 to 27, in which operating said signalling means (40) includes applying a resistive torque of predetermined value to a vehicle steering system during a condition where there is an incorrect driving manoeuvre.

## Patentansprüche

1. Fahrzeugfahrassistenzsystem zum Unterstützen beim Halten oder Ändern der Fahrspur, wobei das Fahrzeug mit richtungsabhängigen Anzeigevorrichtungen, die durch den Fahrer selektiv betrieben werden können, um eine Änderung der Fahrrichtung des Fahrzeugs zu signalisieren, und mit Signalisierungsmitteln (40) ausgestattet ist, die angepasst sind, um den Fahrer über das aktuelle Fahrverhältnis zu informieren, wobei das Fahrzeugfahrassistenzsystem in Kombination Folgendes umfasst:
- Mittel (10a, 10b) zum Erfassen der Umgebung, die das Fahrzeug umgibt, Folgendes beinhaltend:
- erste Erfassungsmittel (10a), die angepasst sind, um erste Signale bereitzustellen, die die Position des Fahrzeugs bezüglich der Konfiguration der Straße, entlang der gefahren wird, anzeigen; und
- zweite Erfassungsmittel (10b), die angepasst sind, um zweite Signale bereitzustellen, die die Anwesenheit von Fahrzeugen, die sich in der Nähe befinden, anzeigen;
- Sensormittel (30), die eine aktivierte Bedingung der richtungsabhängigen Anzeigevorrichtungen anzeigen; und
- elektronische Verarbeitungs- und Steuerungsmittel (20), die mit den Sensormitteln (30) und den Erfassungsmitteln (10a, 10b) zum Gewinnen von Informationen bezüglich des Fahrszenarios des Fahrzeugs verbunden sind und angepasst sind, die Signalisierungsmittel (40) abhängig von den Szenario-Informationen zu betreiben,
**dadurch gekennzeichnet, dass**
die Verarbeitungs- und Steuermittel (20) angeordnet sind zum:
- zunächst Beurteilen des aktuellen Fahrverhältnisses auf der Basis der ersten Signale; und
- wenn die ersten Signale ein Manöver anzeigen, das eine Änderung in der Fahrspur beinhaltet, und die Sensormittel (30) erfassen, dass die richtungsabhängigen Anzeigevorrichtungen nicht aktiviert worden sind, Betreiben der Signalisierungsmittel (40), um einen ersten aktivierten Zustand, der ein inkorrektes Fahrmanöver anzeigt, zum Signalisieren eines anormalen Fahrverhältnisses an den Fahrer anzunehmen, sodass ein Manöver oder eine Betätigung eines Fahrzeugfahrsystems erforderlich ist;
oder alternativ, wenn die ersten Signale ein Manöver anzeigen, das eine Änderung in der Fahrspur beinhaltet, und die Sensormittel (30) erfassen, dass die richtungsabhängigen Anzeigevorrichtungen aktiviert worden sind, dann nachfolgend
- Beurteilen des aktuellen Fahrverhältnisses auf der Basis der zweiten Signale; und
- wenn die Sensormittel (30) erfassen, dass die richtungsabhängigen Anzeigevorrichtungen aktiviert sind, und die zweiten Signale die Anwesenheit von sich nähernden Fahrzeugen anzeigen, Betreiben der Signalisierungsmittel (40), um einen ersten aktivierten Zustand, der ein inkorrektes Fahrmanöver anzeigt, zum Signalisieren eines anormalen Fahrverhältnisses an den Fahrer anzunehmen, sodass ein Manöver oder eine Betätigung eines Fahrzeugfahrsystems erforderlich ist;
oder alternativ, falls die ersten Signale eine Bedingung anzeigen, in der dieselbe Fahrspur beibehalten wird, dann nachfolgendes Beurteilen des aktuellen Fahrverhältnisses auf der Basis des zweiten Signals und,
- wenn die zweiten Signale die Anwesenheit von sich nähernden Fahrzeugen anzeigen, Betreiben der Signalisierungsmittel (40), um einen zweiten aktivierten Zustand, der eine Gefahrenwarnung bereitstellt, zum Signalisieren einer Alarmbedingung an den Fahrer anzunehmen.

2. System nach Anspruch 1, wobei die Mittel (10a, 10b) zum Erfassen der Umgebung, die das Fahrzeug umgibt, Folgendes beinhalten:
- erste Mittel (10a) zum Erfassen eines Bereiches vor dem Fahrzeug, angepasst, um Signale für den vorderen Bereich bereitzustellen, die die Position des Fahrzeugs bezüglich der Konfiguration der Straße, entlang der gefahren wird, anzeigen; und
- zweite Mittel (10b) zum Erfassen wenigstens eines Bereiches entlang der Seite und hinter dem Fahrzeug, angepasst, um Signale für den Rück-/Seitenbereich bereitzustellen, die die Anwesenheit von nahen Fahrzeugen anzeigen.

3. System nach einem der vorhergehenden Ansprüche, wobei die ersten Erfassungsmittel (10a) angepasst sind, Signale bereitzustellen, die die Position des Fahrzeugs bezüglich Grenzlinien einer Fahrspur bereitstellen.

4. System nach einem der vorhergehenden Ansprüche, wobei die Signale, die sich auf die Anwesenheit von nahen Fahrzeugen beziehen, Signale umfassen, die die relative Position dieser Fahrzeuge anzeigen.

5. System nach Anspruch 4, wobei die Signale, die sich auf die Anwesenheit von nahen Fahrzeugen beziehen, Signale umfassen, die die relative Geschwindigkeit dieser Fahrzeuge anzeigen.

6. System nach einem der vorhergehenden Ansprüche, wobei die Verarbeitungs- und Steuermittel (20) zum Beurteilen des Fahrverhältnisses auf der Basis der Signale für Fahrzeuganwesenheit nach dem Durchführen einer ersten Evaluation auf der Basis der Signale für Fahrzeugposition angeordnet sind.

7. System nach einem der vorhergehenden Ansprüche, wobei die Signalisierungsmittel (40) angeordnet sind, um einen Ruhezustand anzunehmen/beizubehalten, der ein korrektes beziehungsweise sicheres Fahrverhältnis anzeigt:
wenn die Signale für Fahrzeugposition ein Manöver anzeigen, das eine Änderung der Fahrspur anzeigt, für die die richtungsabhängigen Anzeigevorrichtungen aktiviert sind, und die Signale für Fahrzeuganwesenheit die Abwesenheit von sich nähernden Fahrzeugen anzeigen; und
wenn die Signale für Fahrzeugposition eine Bedingung anzeigen, in der dieselbe Fahrspur beibehalten wird, und die Signale für Fahrzeuganwesenheit die Abwesenheit von sich nähernden Fahrzeugen anzeigen.

8. System nach einem der vorhergehenden Ansprüche, wobei die Signalisierungsmittel visuelle Signalisierungsvorrichtungen (42, 44) umfassen, die betrieben werden können, um einen ersten aktivierten Zustand, der ein inkorrektes Fahrmanöver anzeigt, und/oder einen zweiten aktivierten Zustand, der eine Warnmeldung bereitstellt, anzunehmen.

9. System nach Anspruch 8, wobei die visuellen Signalisierungsvorrichtungen wenigstens eine Leuchtdiode (42) umfassen, die angepasst ist, einen ersten eine rote Farbe ausstrahlenden Zustand und einen zweiten eine grüne Farbe ausstrahlenden Zustand anzunehmen.

10. System nach Anspruch 9, wobei die Signalisierungsvorrichtung in der Nähe wenigstens eines Rückspiegels (M) des Fahrzeugs angeordnet ist.

11. System nach Anspruch 8, wobei die visuellen Signalisierungsvorrichtungen wenigstens einen Anzeigebildschirm (44) zum Anzeigen von Piktogrammen oder zum Zeigen von Kurznachrichten umfassen.

12. System nach Anspruch 11, wobei die Signalisierungsvorrichtung (44) in dem integrierten Armaturenbrett (C) angeordnet ist.

13. System nach einem der vorhergehenden Ansprüche, wobei die Signalisierungsmittel eine akustische Warnungsvorrichtung (46) umfassen, die in einem ersten aktivierten Zustand betrieben werden kann, der ein inkorrektes Fahrmanöver anzeigt.

14. System nach einem der vorhergehenden Ansprüche, wobei die Signalisierungsmittel taktile Signalisierungsvorrichtungen (48) umfassen.

15. System nach Anspruch 14, wobei die taktilen Signalisierungsvorrichtungen (48) Betätigungsmittel zum Erzeugen einer Vibration am Lenkrad umfassen, die in einer Bedingung betrieben werden können, in der ein inkorrektes Fahrmanöver vorliegt.

16. System nach Anspruch 14, wobei die taktilen Signalisierungsvorrichtungen (48) Lenkbetätigungsmittel umfassen, die elektrisch betätigt werden können, wobei die Verarbeitungsmittel angepasst sind, zu bewirken, dass die Betätigungsmittel ein widerstandsfähiges Drehmoment mit einem vorgegebenen Wert an das Fahrzeuglenksystem während eines inkorrekten Fahrmanövers abgeben.

17. Fahrzeugfahrassistenzverfahren zum Unterstützen beim Halten oder Ändern der Fahrspur, wobei das Fahrzeug mit richtungsabhängigen Anzeigevorrichtungen, die durch den Fahrer selektiv betrieben werden können, um eine Änderung der Fahrrichtung des Fahrzeugs zu signalisieren, und mit Signalisierungsmitteln (40) ausgestattet ist, die angepasst sind, um den Fahrer über das aktuelle Fahrverhältnis zu informieren, wobei das Verfahren die folgenden Prozesse beinhaltet:
- Erfassen von Informationen bezüglich der Umgebung, die das Fahrzeug umgibt, Folgendes beinhaltend:
- Bereitstellen von ersten Signalen, die die Position des Fahrzeugs bezüglich der Konfiguration der Straße, entlang der gefahren wird, anzeigen; und
- Bereitstellen von zweiten Signalen, die die Anwesenheit von nahen Fahrzeugen anzeigen;
- Erfassen des Zustands der richtungsabhängigen Anzeigevorrichtungen;
**dadurch gekennzeichnet, dass** das Verfahren ferner die folgenden Prozesse umfasst:
- zunächst Beurteilen des aktuellen Fahrverhältnisses auf der Basis der ersten Signale; und
- wenn ein Manöver erfasst wird, das eine Änderung in der Fahrspur beinhaltet, und die richtungsabhängigen Anzeigevorrichtungen nicht aktiviert sind, Betreiben der Signalisierungsmittel (40), um einen ersten aktivierten Zustand, der ein inkorrektes Fahrmanöver anzeigt, zum Signalisieren eines anormalen Fahrverhältnisses an den Fahrer anzunehmen, sodass ein Manöver oder eine Betätigung eines Fahrzeugfahrsystems erforderlich ist;
oder alternativ, wenn ein Manöver erfasst wird, das eine Änderung in der Fahrspur beinhaltet, und die richtungsabhängigen Anzeigevorrichtungen aktiviert sind, dann nachfolgend
- Beurteilen des aktuellen Fahrverhältnisses auf der Basis der Signale für Fahrzeuganwesenheit, und
- wenn die richtungsabhängigen Anzeigevorrichtungen aktiviert sind und die Anwesenheit von sich nähernden Fahrzeugen erfasst wird, Betreiben der Signalisierungsmittel (40), um einen ersten aktivierten Zustand, der ein inkorrektes Fahrmanöver anzeigt, zum Signalisieren eines anormalen Fahrverhältnisses an den Fahrer anzunehmen, sodass ein Manöver oder eine Betätigung eines Fahrzeugfahrsystems erforderlich ist;
oder alternativ, falls eine Bedingung erfasst wird, in der dieselbe Fahrspur beibehalten wird, dann nachfolgendes Beurteilen des aktuellen Fahrverhältnisses auf der Basis des zweiten Signals und
- Betreiben der Signalisierungsmittel (40), um einen zweiten aktivierten Zustand, der eine Gefahrenwarnung bereitstellt, zum Signalisieren einer Alarmbedingung an den Fahrer anzunehmen.

18. Verfahren nach Anspruch 17, wobei das Gewinnen von Informationen bezüglich der Umgebung, die das Fahrzeug umgibt, Folgendes beinhaltet:
- Erfassen eines Bereiches vor dem Fahrzeug und Bereitstellen von Signalen für den vorderen Bereich, die die Position des Fahrzeugs bezüglich der Konfiguration der Straße, entlang der gefahren wird, anzeigen; und
- Erfassen wenigstens eines Bereiches entlang der Seite des Fahrzeugs und hinter diesem und Bereitstellen von Signalen für den Rück-/Seitenbereich, die die Anwesenheit von nahen Fahrzeugen anzeigen.

19. Verfahren nach einem der Ansprüche 17 oder 18, wobei der Prozess des Bereitstellens von Signalen, die die Position des Fahrzeugs bezüglich der Konfiguration der Straße, entlang der gefahren wird, anzeigen, das Bereitstellen von Signalen beinhaltet, die die Position des Fahrzeugs bezüglich Grenzlinien einer Fahrspur anzeigen.

20. Verfahren nach einem der Ansprüche 17 bis 19, wobei der Prozess des Bereitstellens von Signalen, die die Anwesenheit von nahen Fahrzeugen anzeigen, das Bereitstellen von Signalen beinhaltet, die die relative Position dieser Fahrzeuge anzeigen.

21. Verfahren nach Anspruch 20, wobei der Prozess des Bereitstellens von Signalen, die die Anwesenheit von nahen Fahrzeugen anzeigen, das Bereitstellen von Signalen beinhaltet, die die relative Geschwindigkeit dieser Fahrzeuge anzeigen.

22. Verfahren nach einem der Ansprüche 17 bis 21, den weiteren Prozess des Beurteilens des Fahrverhältnisses auf der Basis der Signale für Fahrzeuganwesenheit nach dem Durchführen einer ersten Beurteilung auf der Basis der Signale für Fahrzeugposition umfassend.

23. Verfahren nach einem der Ansprüche 17 bis 22, ferner den Prozess des Bewirkens umfassend, dass die Signalisierungsmittel einen Ruhezustand annehmen/beibehalten, der ein korrektes beziehungsweise ein sicheres Fahrverhältnis anzeigt:
wenn ein Manöver, das eine Änderung der Fahrspur beinhaltet, erfasst wird, für die die richtungsabhängigen Anzeigevorrichtungen aktiviert sind, und die Abwesenheit von sich nähernden Fahrzeugen erfasst wird; und
wenn eine Bedingung erfasst wird, in der dieselbe Fahrspur beibehalten wird, und die Abwesenheit von sich nähernden Fahrzeugen erfasst wird.

24. Verfahren nach einem der Ansprüche 17 bis 23, wobei das Betreiben der Signalisierungsmittel (40) das Betreiben wenigstens einer Leuchtdiode (42) in einem ersten aktivierten Zustand, der ein inkorrektes Fahrmanöver anzeigt, und/oder in einem zweiten aktivierten Zustand, der eine Gefahrenwarnung bereitstellt, beinhaltet.

25. Verfahren nach einem der Ansprüche 17 bis 24, wobei das Betreiben der Signalisierungsmittel (40) das Betreiben eines Anzeigebildschirms (44) beinhaltet, um Piktogramme anzuzeigen oder Kurznachrichten zu zeigen.

26. Verfahren nach einem der Ansprüche 17 bis 25, wobei das Betreiben der Signalisierungsmittel (40) das Aktivieren einer akustischen Warnvorrichtung (46) in einem ersten aktivierten Zustand beinhaltet, der ein inkorrektes Fahrmanöver anzeigt.

27. Verfahren nach einem der Ansprüche 17 bis 26, wobei das Betreiben der Signalisierungsmittel (40) das Erzeugen einer Vibration an dem Lenkrad während einer Bedingung beinhaltet, in der ein inkorrektes Fahrmanöver vorliegt.

28. Verfahren nach einem der Ansprüche 17 bis 27, wobei das Betreiben der Signalisierungsmittel (40) das Anwenden eines widerstandsfähigen Drehmomentes mit einem vorgegebenen Wert an das Fahrzeuglenksystem während einer Bedingung beinhaltet, in der ein inkorrektes Fahrmanöver vorliegt.

## Revendications

1. Système d'assistance à la conduite de véhicule destiné à aider à rester sur une voie de déplacement ou à en changer, le véhicule étant équipé de dispositifs indicateurs de direction qui peuvent être actionnés sélectivement par le conducteur afin de signaler un changement dans la direction de déplacement du véhicule et de moyens de signalisation (40) adaptés pour informer le conducteur de la situation actuelle de conduite, dans lequel le système d'assistance à la conduite de véhicule comprend en combinaison :
- des moyens (10a, 10b) pour détecter le milieu environnant du véhicule, comportant :
- des premiers moyens de détection (10a) adaptés pour fournir des premiers signaux indiquant la position du véhicule par rapport à la configuration de la route empruntée ; et
- des seconds moyens de détection (10b) adaptés pour fournir des seconds signaux indiquant la présence de véhicules à proximité ;
- des moyens capteurs (30) indiquant un état activé des dispositifs indicateurs de direction ; et
- des moyens électroniques de traitement et de commande (20) reliés auxdits moyens capteurs (30) et auxdits moyens de détection (10a, 10b) pour acquérir des informations relatives au scénario de conduite du véhicule, et adaptés pour actionner lesdits moyens de signalisation (40) en fonction desdites informations de scénario,
**caractérisé en ce que**
lesdits moyens de traitement et de commande (20) sont conçus pour :
- en premier lieu, évaluer la situation actuelle de conduite sur la base desdits premiers signaux ; et
- lorsque lesdits premiers signaux indiquent une manoeuvre comportant un changement de voie de déplacement et que lesdits moyens capteurs (30) détectent que lesdits dispositifs indicateurs de direction n'ont pas été activés, actionner lesdits moyens de signalisation (40) de manière à adopter un premier état activé indiquant une manoeuvre de conduite incorrecte, pour signaler au conducteur une situation de conduite anormale faisant qu'une manoeuvre ou un actionnement d'un système de conduite du véhicule est nécessaire ;
ou bien, lorsque lesdits premiers signaux indiquent une manoeuvre comportant un changement de voie de déplacement et que lesdits moyens capteurs (30) détectent que lesdits dispositifs indicateurs de direction ont été activés, alors
- évaluer consécutivement la situation actuelle de conduite sur la base des seconds signaux ; et
lorsque lesdits moyens capteurs (30) détectent que lesdits dispositifs indicateurs de direction sont activés et que lesdits seconds signaux indiquent la présence de véhicules en approche, actionner lesdits moyens de signalisation (40) de manière à adopter un premier état activé indiquant une manoeuvre de conduite incorrecte, pour signaler au conducteur une situation de conduite anormale faisant qu'une manoeuvre ou un actionnement d'un système de conduite du véhicule est nécessaire,
ou bien, si les premiers signaux ont indiqué une situation où la même voie de déplacement est maintenue, alors évaluer consécutivement la situation actuelle de conduite sur la base du second signal et
lorsque lesdits seconds signaux indiquent la présence de véhicules en approche, activer lesdits moyens de signalisation (40) de manière à adopter un second état activé fournissant un avertissement de danger, pour signaler au conducteur une situation d'alerte.

2. Système selon la revendication 1, dans lequel lesdits moyens (10a, 10b) pour détecter le milieu environnant du véhicule comportent :
- des premiers moyens (10a) pour détecter une zone située devant le véhicule, adaptés pour fournir des signaux de zone avant indiquant la position du véhicule par rapport à la configuration de la route empruntée ; et
- des seconds moyens (10b) pour détecter au moins une zone située le long du côté du véhicule et derrière celui-ci, adaptés pour fournir des signaux de zone arrière/latérale indiquant la présence de véhicules à proximité.

3. Système selon l'une quelconque des revendications précédentes, dans lequel lesdits premiers moyens de détection (10a) sont adaptés pour fournir des signaux indiquant la position du véhicule par rapport aux traits de démarcation d'une voie de déplacement.

4. Système selon l'une quelconque des revendications précédentes, dans lequel lesdits signaux relatifs à la présence de véhicules à proximité comprennent des signaux indiquant la position relative de ces véhicules.

5. Système selon la revendication 4, dans lequel lesdits signaux relatifs à la présence de véhicules à proximité comprennent des signaux indiquant la vitesse relative de ces véhicules.

6. Système selon l'une quelconque des revendications précédentes, dans lequel les moyens de traitement et de commande (20) sont conçus pour évaluer la situation de conduite sur la base des signaux de présence de véhicule après avoir effectué une première évaluation sur la base des signaux de position de véhicule.

7. Système selon l'une quelconque des revendications précédentes, dans lequel lesdits moyens de signalisation (40) sont adaptés pour adopter ou maintenir un état de repos indiquant une situation de conduite correcte ou sécuritaire, respectivement :
lorsque les signaux de position de véhicule indiquent une manoeuvre comportant un changement de voie de déplacement pour laquelle lesdits dispositifs indicateurs de direction sont activés, et que lesdits signaux de présence de véhicule indiquent l'absence de véhicules en approche ; et
lorsque les signaux de position de véhicule indiquent une situation où la même voie de déplacement est maintenue, et que lesdits signaux de présence de véhicule indiquent l'absence de véhicules en approche.

8. Système selon l'une quelconque des revendications précédentes, dans lequel lesdits moyens de signalisation comprennent des dispositifs de signalisation visuels (42, 44) qui peuvent être actionnés de manière à adopter un premier état activé indiquant une manoeuvre de conduite incorrecte et/ou un second état activé fournissant un avertissement de danger.

9. Système selon la revendication 8, dans lequel lesdits dispositifs de signalisation visuels comprennent au moins une diode électroluminescente (42) adaptée pour adopter un premier état d'émission de couleur rouge et un second état d'émission de couleur verte.

10. Système selon la revendication 9, dans lequel ledit dispositif de signalisation est agencé à proximité d'au moins un rétroviseur (M) du véhicule.

11. Système selon la revendication 8, dans lequel lesdits dispositifs de signalisation visuels comprennent au moins un écran d'affichage (44) destiné à afficher des pictogrammes ou à présenter des messages courts.

12. Système selon la revendication 11, dans lequel ledit dispositif de signalisation (44) est agencé dans le tableau de bord (C).

13. Système selon l'une quelconque des revendications précédentes, dans lequel lesdits moyens de signalisation comprennent un dispositif d'avertissement acoustique (46) qui peut être actionné dans un premier état activé indiquant une manoeuvre de conduite incorrecte.

14. Système selon l'une quelconque des revendications précédentes, dans lequel lesdits moyens de signalisation comprennent des dispositifs de signalisation tactiles (48).

15. Système selon la revendication 14, dans lequel lesdits dispositifs de signalisation tactiles (48) comprennent des moyens d'actionnement pour produire une vibration sur le volant, qui peuvent être actionnés dans une situation où il se produit une manoeuvre de conduite incorrecte.

16. Système selon la revendication 14, dans lequel lesdits dispositifs de signalisation tactiles (48) comprennent des moyens d'actionnement de direction qui peuvent être actionnés électriquement, les moyens de traitement étant adaptés pour amener lesdits moyens d'actionnement à imprimer un couple résistif d'une valeur prédéterminée au système de direction du véhicule lors d'une manoeuvre de conduite incorrecte.

17. Procédé d'assistance à la conduite de véhicule destiné à aider à rester sur la voie de déplacement ou à en changer, le véhicule étant équipé de dispositifs indicateurs de direction qui peuvent être actionnés sélectivement par le conducteur afin de signaler un changement dans la direction de déplacement du véhicule, et de moyens de signalisation (40) adaptés pour informer le conducteur de la situation actuelle de conduite, dans lequel le procédé comprend les opérations suivantes :
- l'acquisition d'informations relatives au milieu environnant du véhicule, comportant :
- la fourniture de premiers signaux indiquant la position du véhicule par rapport à la configuration de la route empruntée ; et
- la fourniture de seconds signaux indiquant la présence de véhicules à proximité ;
- la détection de l'état des dispositifs indicateurs de direction ;
**caractérisé en ce que** le procédé comprend en outre les opérations suivantes :
- en premier lieu, l'évaluation de la situation actuelle de conduite sur la base desdits premiers signaux ; et
- lorsqu'une manoeuvre comportant un changement de voie de déplacement est détectée et que lesdits dispositifs indicateurs de direction ne sont pas activés, l'actionnement desdits moyens de signalisation (40) de manière à adopter un premier état activé indiquant une manoeuvre de conduite incorrecte, pour signaler au conducteur une situation de conduite anormale faisant qu'une manoeuvre ou un actionnement d'un système de conduite du véhicule est nécessaire ;
ou bien, lorsqu'une manoeuvre comportant un changement de voie de déplacement est détectée et que lesdits dispositifs indicateurs de direction sont activés, alors
- l'évaluation consécutive de la situation actuelle de conduite sur la base desdits signaux de présence de véhicule, et
- lorsque lesdits dispositifs indicateurs de direction sont activés et que la présence de véhicules en approche est détectée, l'actionnement desdits moyens de signalisation (40) de manière à adopter un premier état activé indiquant une manoeuvre de conduite incorrecte, pour signaler au conducteur une situation de conduite anormale faisant qu'une manoeuvre ou un actionnement d'un système de conduite du véhicule est nécessaire,
ou bien, si une situation où la voie de déplacement est maintenue est détectée, alors l'évaluation consécutive de la situation actuelle de conduite sur la base du second signal et
- l'actionnement desdits moyens de signalisation (40) de manière à adopter un second état activé fournissant un avertissement de danger, pour signaler au conducteur une situation d'alerte.

18. Procédé selon la revendication 17, dans lequel l'acquisition d'informations relatives au milieu environnant du véhicule comporte :
- la détection d'une zone située devant le véhicule et la fourniture de signaux de zone avant indiquant la position du véhicule par rapport à la configuration de la route empruntée ; et
- la détection d'au moins une zone située le long du côté du véhicule et derrière celui-ci et la fourniture de signaux de zone arrière/latérale indiquant la présence de véhicules à proximité.

19. Procédé selon l'une quelconque des revendications 17 ou 18, dans lequel l'opération de fourniture de signaux indiquant la position du véhicule par rapport à la configuration de la route empruntée comporte la fourniture de signaux indiquant la position du véhicule par rapport aux traits de démarcation d'une voie de déplacement.

20. Procédé selon l'une quelconque des revendications 17 à 19, dans lequel l'opération de fourniture de signaux indiquant la présence de véhicules à proximité comporte la fourniture de signaux indiquant la position relative de ces véhicules.

21. Procédé selon la revendication 20, dans lequel l'opération de fourniture de signaux indiquant la présence de véhicules à proximité comporte la fourniture de signaux indiquant la vitesse relative de ces véhicules.

22. Procédé selon l'une quelconque des revendications 17 à 21, comprenant l'opération supplémentaire d'évaluation de la situation de conduite sur la base des signaux de présence de véhicule après réalisation d'une première évaluation sur la base des signaux de position de véhicule.

23. Procédé selon l'une quelconque des revendications 17 à 22, comprenant en outre l'opération consistant à amener lesdits moyens de signalisation à adopter ou maintenir un état de repos indiquant une situation de conduite correcte ou sécuritaire, respectivement :
lorsqu'une manoeuvre comportant un changement de voie de déplacement est détectée, pour laquelle lesdits dispositifs indicateurs de direction sont activés, et que l'absence de véhicules en approche est détectée ; et
lorsqu'une situation où la même voie de déplacement est maintenue est détectée, et que l'absence de véhicules en approche est détectée.

24. Procédé selon l'une quelconque des revendications 17 à 23, dans lequel l'actionnement desdits moyens de signalisation (40) comporte la commande d'au moins une diode électroluminescente (42) dans un premier état activé indiquant une manoeuvre de conduite incorrecte et/ou dans un second état activé fournissant un avertissement de danger.

25. Procédé selon l'une quelconque des revendications 17 à 24, dans lequel l'actionnement desdits moyens de signalisation (40) comporte la commande d'un écran d'affichage (44) de manière à afficher des pictogrammes ou à présenter des messages courts.

26. Procédé selon l'une quelconque des revendications 17 à 25, dans lequel l'actionnement desdits moyens de signalisation (40) comporte l'activation d'un dispositif d'avertissement acoustique (46) dans un premier état activé indiquant une manoeuvre de conduite incorrecte.

27. Procédé selon l'une quelconque des revendications 17 à 26, dans lequel l'actionnement desdits moyens de signalisation (40) comporte la production d'une vibration sur le volant lors d'une situation où il se produit une manoeuvre de conduite incorrecte.

28. Procédé selon l'une quelconque des revendications 17 à 27, dans lequel l'actionnement desdits moyens de signalisation (40) comporte l'application d'un couple résistif de valeur prédéterminée à un système de direction du véhicule lors d'une situation où il se produit une manoeuvre de conduite incorrecte.
